Europäisches Patentamt

European Patent Office

Office européen des brevets

(11) Veröffentlichungsnummer: **0 106 017**
**B1**

(12) **EUROPÄISCHE PATENTSCHRIFT**

(45) Veröffentlichungstag der Patentschrift: **09.11.88**

(21) Anmeldenummer: **83105901.9**

(22) Anmeldetag: **16.06.83**

(51) Int. Cl.⁴: **B 01 J 20/34,** B 01 D 53/02,
C 01 B 31/08, B 01 D 53/06,
F 27 B 15/00, F 28 C 3/10

(54) **Verfahren zur Wiederaufheizung und Förderung eines körnigen Wärmeträgers sowie Vorrichtung insbesondere zu dessen Durchführung.**

(30) Priorität: **10.09.82 DE 3233533**

(43) Veröffentlichungstag der Anmeldung:
**25.04.84 Patentblatt 84/17**

(45) Bekanntmachung des Hinweises auf die
Patenterteilung:
**09.11.88 Patentblatt 88/45**

(84) Benannte Vertragsstaaten:
**AT DE FR GB NL**

(56) Entgegenhaltungen:
**EP-A-0 049 343
DE-A-2 852 848
US-A-3 585 023**

**L. Reh "Imidized Bed Processing", Chem. Eng.
Progress, vol. 67, no. 2, pp. 58,59**

**Die Akte enthält technische Angaben, die nach
dem Eingang der Anmeldung eingereicht
wurden und die nicht in dieser Patentschrift
enthalten sind.**

(73) Patentinhaber: **Uhde GmbH
Friedrich-Uhde-Strasse 15
D-4600 Dortmund 1 (DE)**

(72) Erfinder: **Buxel, Ludwig Michael, Dipl.-Ing.
Zum Gehölz 5b
D-4355 Waltrop (DE)**
Erfinder: **Mühlhaus, Ludwig, Dr. Dipl.-Ing.
Nothweg 92
D-5680 Iserlohn (DE)**
Erfinder: **Neumann, Ulrich, Dipl.-Ing.
Gladbeckeweg 18
D-4600 Dortmund 41 (DE)**

(74) Vertreter: **Patentanwälte Meinke und
Dabringhaus Dipl.-Ing. J. Meinke Dipl.-Ing. W.
Dabringhaus
Westenhellweg 67
D-4600 Dortmund 1 (DE)**

Courier Press, Leamington Spa, England.

# Beschreibung

Die Erfindung richtet sich auf ein Verfahren sowie eine Vorrichtung zur Wiederaufbereitung und Wiedererwärmung sowie Förderung eines körnigen, mittels eines Gases förderbaren Wärmeträgers (Sand) zum Einsatz bei der Desorption durch Erhitzung von beladenen, stückigen Adsorptionsmitteln, wie beispielsweise Aktivkohlepellets.

In "Chem. Ind. XXVII/Aug. 1975, Seiten 457—461" beschreiben Knoblauch u.a. die Betriebserfahrungen mit der Rauchgasentschwefelung. Bei einem dort beschriebenen Rauchgasentschwefelungsverfahren mit Desorption von beladenem Aktivkoks, wobei dieser Aktivkoks mit Sand von ca. 750°C in einem speziell konstruierten Desorber in Kontakt gebracht wird, wird der den Desorber verlassende Sand nach der Trennung von Koks einer Brennkammer zugeführt und mit den dort erzeugten heißen Rauchgasen bei gleichzeitiger Wiederaufheizung nach oben zur Wiederverwendung gefördert. Dieses Verfahren wird auch als "Gaslift" bezeichnet.

Auch in der US—A 3 585 023 ist ein derartiger Gaslift beschrieben, bei dem mit Heißluft bzw. Brenngasen geförderte Partikel eine sehr kurze Verweildauer innerhalb der Förderstrecke haben, d.h. die Partikel bewegen sich mit sehr hoher Geschwindigkeit.

Dieser sog. Gaslift hat eine Reihe von Vorteilen, allerdings auch schwerwiegende Nachteile, die insbesondere darin bestehen, daß sehr hohe Gasgeschwindigkeiten vorliegen, so daß es zu großen Abriebverlusten und daraus zu einem sehr großen Energiebedarf kommt. Auch müssen Teile der Rauchgase im Kreislauf geführt werden, um die Ausmauerung des Gasliftes zu kühlen. Gleichzeitig bedingt eine gegen hohe Temperaturen resistente Ausmauerung sehr hohe Anlagekosten.

Aufgabe der Erfindung ist die Schaffung einer Lösung, mit der die oben beschriebenen Nachteile vermieden werden, wobei insbesondere geringe Fördergeschwindigkeiten möglich gemacht werden, ebenso wie vergleichsweise niedrige Temperaturen und eine erhebliche Brennstofferparnis zur Erhitzung des Wärmeträgers erreichbar sind.

Mit einem Verfahren der eingangs bezeichneten Art wird diese Aufgabe gemäß der Erfindung dadurch gelöst, daß der Wärmeträger über eine stark expandierende zirkulierende Wirbelschicht gleichzeitig von einer in Schwerkraftrichtung tiefen Position in eine vertikale hohe Position gefördert und erhitzt und nach Verlassen der Wirbelschicht unter Einhaltung eines natürlichen Gefälles über einen Desorber und eine Einrichtung zur Trennung von Wärmeträger und Adsorbtionsmittel zum Beginn der Fördereinrichtung zirkuliert wird.

Unter dem Ausdruck "zirkulierende Wirbelschicht" wird dabei eine stark expandierte Wirbelschicht, deren Bettmaterial zirkuliert, verstanden. Der Begriff ist genauer definiert, z. B. in dem Aufsatz L.Reh "Fluidized Bed Processing" in "Chemical Engineering Progress" (Vol. 67, No. 2), Febr. 1971, Seite 58—59, wo er mit "Fast Fluidization" bezeichnet ist. Eine derartige "zirkulierende Wirbelschicht" wird dort zur Kalzinierung von Aluminiumhydroxid nach dem Lurgi-Verfahren eingesetzt. Aus der DE—OS 25 10 116 ist der Einsatz einer derartigen Wirbelschicht auch zur Reduktion von Eisen (III)-oxid enthaltenden Material bekannt.

Diese bekannten Einsätze von Wirbelschichten dienen nicht der Erwärmung und der Förderung eines körnigen Wärmeträgers, wie dies bei der Erfindung der Fall ist.

In Ausgestaltung sieht die Erfindung vor, daß der Wärmeträger nach Verlassen der zirkulierenden Wirbelschicht einem Wärmeträgerabscheider und ggf. einem Wärmeträgerverteiler sowie einer Wärmeträgervorlage vor dem Desorber zugeführt wird, wobei für den Wärmeträger ein natürliches Gefälle ausrechterhalten wird.

Die Aufrechterhaltung eines natürlichen Gefälles nacht die Durchführung des beanspruchten Verfahrens besonders einfach und wirtschaftlicht. Die Ausnutzung der Förderstrecke als gleichzeitige Erhitzungsstrecke für den Wärmeträger macht dabei Materialien möglich, die sehr viel geringeren Temperaturen ausgesetzt werden, als dies bei herkömmlichen Förderverfahren der eingangs bezeichneten Art der Fall ist, weil die Wärme der Flamme sehr schnell an das Bettmaterial abgegebenen wird und deshalb die Wand der Fördereinrichtung nicht sehr hohen Temperaturen ausgesetzt ist.

Dies ermöglicht es in solchen Fällen, in denen für die Förderung geringe Luftmengen ausreichen und gleichzeitig zur Aufwärmung des Wärmetägers eine große Brennstoffmenge erforderlich ist, die Verbrennung nahezu stöchiometrisch und damit energiesparend zu betrieben. Auch ist eine unterstöchiometrische Verbrennung grundsätzlich möglich.

Nach der Erfindung kann auch vorgesehen sein, daß bei der Adsorption mittels Aktivkoks der Aktivkoksabrieb mit als Brennstoff zur Erhitzung des Wärmeträgers eingesetzt wird. Diese erfindungsgemäße Ausgestaltung ergibt eine besonders günstige Energieausnutzung des beanspruchten Verfahrens.

Vorteilhaft kann es auch sein, daß die Zuführung des Wärmeträgers zur Fördereinrichtung bei einer Temperatur von über 400°C vorzugsweise von etwa 650°C erfolgt, während z. B. die Austragung des Wärmeträgers aus der Wirbelschicht vorzugsweise bei einer Temperatur von 700—850°C erfolgen kann. Bei einem speziellen Einsatzgebiet kann in Temperaturbereichen gearbeitet werden, die eine optimale Durchführung erlauben.

Zweckmäßig kann es sein, wenn ein Teil des Wärmeträgers aus dem Wärmeträgerverteiler direkt zum Beginn der Fördereinrichtung zurückgeführt wird, was nach der Erfindung in Ausgestaltung ebenfalls vorgesehen ist. Dieser "Kurzschluß" des Wärmeträgerkreislaufes kann sinnvoll sein, wenn z. B. oder Wärmeträger im Überschuß des Verfahrenskreislaufes umläuft und/oder bei Beginn des Verfahrens, wenn ein noch kalter Wärmeträger nicht direkt einem Desorber o. dgl. zugeführt werden soll oder kann.

Vorteilhaft ist, es, wenn der Brennstoff im Bereich des unteren Drittels der Fördereinrichtung zugeführt wird, was die Erfindung ebenfalls vorsieht.

Um zu erreichen, daß der Wärmeträger aus der zirkulierenden Wirbelschicht vollständig ausgetragen wird, d.h. kontinuierlich als Gesamtmasse in Umlauf bleibt, ist nach der Erfindung vorgesehen, daß als Wärmeträger feiner Sand von im wesentlichen gleichmäßiger Korngröße eingesetzt wird. Dies soll bedeuten, daß das Spektrum der Korngröße des eingesetzten Sandes möglichst eng gehalten werden soll.

Die Erfindung schlät zur Lösung der eingangs bezeichneten Aufgabe eine Vorrichtung vor, die sich dadurch auszeichnet, daß eine Fördereinrichtung mit einer Rückführleitung aus einem Sandverteiler zur direkten Rückleitung einer Sandteilmenge zum Anfang der Fördereinrichtung ausgerüstet ist.

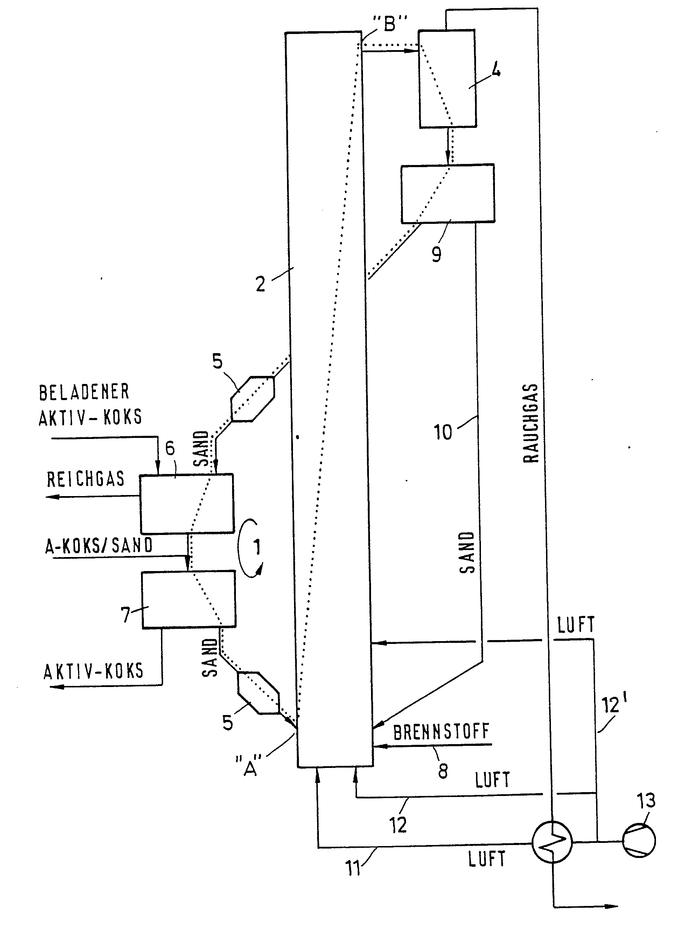

Die Erfindung ist nachstehend anhand der Zeichnung beispielsweise näher erläutert:

Diese ziegt in der einzigen Figur ein Blockschaltbild einer Vorrichtung eines Ausführungsbeispiels der Erfindung bei der Rauchgasentschwefelung mit Aktivkoks.

Der in der Figur punktiert wiedergegebene Wärmeträger-bzw. Sandkreislauf ist mit 1 bezeichnet. Ausgehend von der relativ zur Schwerkraft tiefsten Position, die mit "A" bezeichnet ist, wird der Sand in eine Fördereinrichtung 2 eingegeben, die durch Zufuhr von Trägerluft, z. B. aus einem Luftgebläse eine stark expandierte Wirbelschicht bildet, die so hoch ist, daß der Sand am oberen mit "B" bezeichneten Ende der Förderstrecke aus der Fördereinrichtung 2 ausgetragen wird. Der Sand wird dann einem Sandabscheider, z. B. einem Zyklon 4, anschließend einer Sandvorlage 5 als Druckschleuse und dann einem Desorber 6 zugeführt.

Vom Desorber 6 gelangt der Sand, der im Desorber 6 mit z. B. beladenem Aktivkoks in Kontakt gekommen ist, in einen Aktivkoks/Sandabscheider 7, und von dort ggf. über eine weitere Sandvorlage 5 zürck zum unteren Ausgangspunkt "A" des Sandkreislaufes.

Neben der Eingabe von Luft in die Fördereinrichtung 2 wird dieser auch etwa im unteren Drittel Brennstoff, z. B. Öl, durch eine Leitung 8 zugeführt. Zusammen mit dem ggf. aus dem Aktivkoks stammenden Abrieb kann der Brennstoff in der zirkulierenden Wirbelschicht optimal verbrennen, ohne daß dabei die Wände der Fördereinrichtung 2 thermisch überlastet wären. Die Temperaturen liegen bei ca. 700°C—850°C anstelle von ca. 1500°C bei einem Gaslift. Die vorgewärmte, über die Leitung 11 eingeblasene Förderluft dient gleichzeitig als Verbrennungsluft. Bei 12 und 12' kann Kaltluft zusätzlich in die Fördereinrichtung 2 eingeblasen werden.

In der Abbildung ist in Schwerkraftrichtung hinter dem Sandabscheider noch ein Sandverteiler 9 eingezeichnet, der über eine Rückführleitung 10 verfügt, so daß man über diese Sand direkt zum Anfang der Fördereinrichtung 2 zurückführen kann, ohne daß dieser Sand seine Wärme z. B. an ein Adsorptionsmittel abgibt.

Natürlich ist das beschriebene Ausführungsbeispiel noch in vielfacher Hinsicht abzuändern. So ist die Erfindung insbesondere nicht ausschließlich auf den Einsatz bei der Desorption zur Rauchgasentschwefelung beschränkt. Die Erfindung kann überall dort eingesetzt werden, wo ein körniger, mittels eines Gases förderbarer Wärmeträger eingesetzt wird. Auch ist die Erfindung nicht auf die Erhitzung eines solchen Wärmeträgers beschränkt.

**Patentansprüche**

1. Verfahren zur Wiederaufbereitung und Wiedererwärmung sowie Förderung eines körnigen, mittels eines Gases förderbaren Wärmeträgers (z.B. Sand) zum Einsatz bei der Desorption durch Erhitzung von beladenen, stückigen Adsorptionsmitteln, wie beispielsweise Aktivkohlepellets, dadurch gekennzeichnet, daß der Wärmeträger über eine stark expandierende zirkulierende Wirbelschicht gleichzeitig von einer in Schwerkraftrichtung tiefen Position in eine vertikale hohe Position gefördert und erhitzt und nach Verlassen der Wirbelschicht unter Einhaltung eines natürlichen Gefälles über einen Desorber und eine Einrichtung zur Trennung von Wärmeträger und Adsorptionsmittel zum Beginn der Fördereinrichtung zirkuliert wird.

2. Verfahren nach Anspruch 1, dadurch gekennzeichnet, daß der Wärmeträger nach Verlassen der zirkulierenden Wirbelschicht einem Wärmeträgerabscheider und ggf. einem Wärmeträgerverteiler sowie einer Wärmeträgervorlage vor dem Desorber zugeführt wird, wobei für den Wärmeträger ein natürliches Gefälle aufrechterhalten wird.

3. Verfahren nach Anspruch 1 oder 2, dadurch gekennzeichnet, daß bei der Adsorption mittels Aktivkoks der Aktivkoksabrieb mit als Brennstoff zur Erhitzung des Wärmeträgers eingesetzt wird.

4. Verfahren nach Anspruch 1 oder einem der folgenden mit einer Arbeitstemperatur des Wärmeträgers bei der Desorption von etwa 450—650°C, dadurch gekennzeichnet, daß die Zuführung des Wärmeträgers zur Fördereinrichtung bei einer Temperatur von über 400°C vorzugsweise von etwa 650°C erfolgt.

5. Verfahren nach Anspruch 1 oder einem der folgenden, dadurch gekennzeichnet, daß ein Teil des Wärmeträgers aus dem Wärmeträgenverteiler direkt zum Beginn der Fördereinrichtung zugeführt wird.

6. Verfahren nach Anspruch 1 oder einem der folgenden, dadurch gekennzeichnet, daß der Brennstoff im Bereich des unteren Drittels der Fördereinrichtung zugeführt wird.

7. Verfahren nach Anspruch 1 oder einem der folgenden, dadurch gekennzeichnet, daß als Wärmeträger feiner Sand von im wesentlichen gleichmäßiger Korngröße eingesetzt wird.

8. Vorrichtung insbesondere zur Durchführung des Verfahrens nach Anspruch 1 oder einem der folgenden mit Sand als Wärmeträger, dadurch gekennzeichnet, daß eine Fördereinrichtung (2) mit einer Rückführleitung (10) aus einem Sandverteiler (9) zur direkten Rückleitung einer Sandteilmenge zum Anfang ("A") der Fördereinrichtung (2) ausgerüstet ist.

**Revendications**

1. Procédé pour le retraitement, le réchauffage et le transport d'un caloporteur granulaire (par exemple du sable) pouvant être acheminé au moyen d'un gaz, en vue de l'utilisation lors de la désorption, par chauffage, d'agents d'adsorption chargés revêtant la forme de morceaux, comme par exemple des boulettes de charbon actif, caractérisé par le fait que le caloporteur est simultanément acheminé et chauffé, par l'intermédiaire d'une couche tourbillonnaire en circulation soumise à une forte expansion, d'une position basse dans la direction de la pesanteur à une position verticale haute; puis, après avoir quitté la couche tourbillonnaire, est mis en circulation vers la zone initiale de l'appareil d'acheminement, avec entretien d'une pente naturelle, par l'intermédiaire d'un désorbeur et d'un appareil servant à séparer ce caloporteur et l'agent d'adsorption.

2. Procédé selon la revendication 1, caractérisé par le fait que, après avoir quitté la couche tourbillonnaire en circulation, le caloporteur est délivré à un séparateur de caloporteur et éventuellement à une répartiteur de caloporteur, ainsi qu'à un collecteur de caloporteur précédant le désorbeur, une pente naturelle étant alors entretenue pour ce caloporteur.

3. Procédé selon la revendication 1 ou 2, caractérisé par le fait que, lors de l'adsorption au moyen de coke actif, les fines d'abrasion de ce coke actif sont conjointment utilisées, en tant que combustible, pour chauffer le caloporteur.

4. Procédé selon la revendication 1 ou l'une des suivantes, avec une température de service du caloporteur comprise entre environ 450 et 650°C lors de la désorption, caractérisé par le fait que la délivrance du caloporteur à l'appareil d'acheminement a lieu à une température excédant 400°C, de préférence d'environ 650°C.

5. Procédé selon la revendication 1 ou l'une des suivantes, caractérisé par le fait qu'une partie du caloporteur provenant du répartiteur de caloporteur est directement dirigée vers la zone initiale de l'appareil d'acheminement.

6. Procédé selon la revendication 1 ou l'une des suivantes, caractérisé par le fait que le combustible est délivré au voisinage du tiers inférieur de l'appareil d'acheminement.

7. Procédé selon la revendication 1 ou l'une des suivantes, caractérisé par le fait qu'on utilise, en tant que caloporteur, un sable fin dont la granulométrie est substantiellement régulière.

8. Dispositif, notamment pour la mise en oeuvre du procédé selon la revendication 1 ou l'une des suivantes, utilisant du sable en tant que caloporteur, caractérisé par le fait qu'un appareil d'acheminement (2) est équipé d'un conduit de réintroduction (10) provenant d'un répartiteur (9) de sable, en vue du retour direct d'une quantité de sable partielle vers la zone initiale ("A") de l'appareil d'acheminement (2).

**Claims**

1. A process for re-processing and re-heating and for conveying a granular heat-transfer medium (sand) which is conveyable by means of a gas for use in desorption by heating of charged pelletised adsorption agents, such as activated carbon pellets, for example, characterised in that the heat transfer medium is simultaneously conveyed from a low position in the direction of gravity to a vertical high position via a considerably expanding circulating fluidised bed and is heated and, after leaving the fluidised bed, is circulated, retaining its natural fall, to the start of the conveying device via a desorber and a device for separating heat transfer media.

2. A process according to Claim 1, characterised in that, after leaving the circulating fluidised bed, the heat transfer medium is supplied to a heat transfer medium collector and, if necessary, a heat transfer medium distributor and a heat transfer medium receiver upstream of the desorber, a natural fall being maintained for the heat transfer medium.

3. A process according to Claim 1 or 2, characterised in that during adsorption by means of activated coke, the active coke breeze is used as a supplementary fuel for heating the heat transfer medium.

4. A process according to Claim 1 or one of the subsequent claims with a working temperature of the heat transfer medium during desorption of approximately 450—650°C, characterised in that the heat transfer medium is supplied to the conveyor at a temperature of more than 400°C, preferably 650°C.

5. A process according to Claim 1 or one of the subsequent claims, characterised in that part of the heat transfer medium is supplied from the heat transfer medium distributor straight to the start of the conveyor.

6. A process according to Claim 1 or one of the subsequent claims, characterised in that the fuel is supplied in the region of the lower third of the conveyor.

7. A process according to Claim 1 or one of the subsequent claims, characterised in that sand having a substantially uniform grain size is used as a heat transfer medium.

8. A device, in particular for carrying out the process according to Claim 1 or one of the subsequent claims with sand as a heat transfer medium, characterised in that a conveyor (2) is equipped with a return line (10) from a sand distributor (9) for directly returning a portion of sand to the start ("A") of the conveyor (2).